# EUROPEAN PATENT APPLICATION

(11) **EP 2 676 551 A1**
(43) Date of publication of application: **25.12.2013**
(21) Application number: 12397519.5
(22) Date of filing: 20.06.2012
(51) Int. Cl.: A23K 1/16, A23K 1/18

(54) **Feed enhancing energy metabolism in milk production**

(71) Applicant: Benemilk Ltd, 21200 Raisio (FI)
(72) Inventor: Holma, Merja, 21200 Raisio (FI)
(74) Representative: Matilainen, Mirja Helena

(57) **Abstract**

The present invention relates to a feed which has a relatively hight total fat percentage and which contains inside and on the surface of feed raw material particles a fatty acid mixture rich in saturated free fatty acids. The invention is also directed to a process for preparing said feed, to a method for increasing concentrations of protein and fat in milk and for increasing milk production of a lactating animal.

## Description

The present invention relates to a ruminant feed which has a relatively high total fat percentage and which contains inside and on the surface of feed raw material particles a fatty acid mixture rich in saturated free fatty acids. The invention is also directed to a process for preparing said feed and to a method for increasing milk production of a lactating animal and for increasing concentrations of protein and fat in milk.

### Background

Although there has been a threefold increase in milk production of cows during the last decades, the utilization of feed has not improved. The same amount of energy intake per kilogram of milk is still needed as tens of years ago.

### Effects of the invention

The feed according to the invention improves the energy efficiency in milk production of a ruminant. When the utilization of energy becomes more effective, milk production increases and the concentrations of protein and fat in the milk rise. Especially, the feed enhances fat synthesis in the mammary gland by bringing milk fat components to the cell and therefore the energy consuming synthesis in the mammary gland is not necessary. Thus the glucose can more efficiently be used for lactose production whereupon milk production increases. The milk protein content rises since there is no need to produce glucose from the amino acids. When the cow does not lose weight at the beginning of the lactation season the problem with low fertility also decreases.

The formation of milk in the mammary gland is a complex enzymatic process regulated by hormones, requiring lots of ATP energy at the cell level, as well as suitable starting materials and enzymes. The main components of milk, i.e. lactose, protein and fat, are synthesized in the cells of the udder. Glucose availability in the mammary gland has been regarded as the main limiting factor in milk production, in addition to the availability of some amino acids. The role of acetate as a starting material of *de novo* synthesis of milk fat is known. It is also known that acetate is of relevance as a source of energy. The importance of acetate in ruminants has now been recognized to be even greater than believed before. It has a unique role in the energy metabolism as part of ATP formation in the synthesis of all milk components.

### Feeding of cows

Due to rumen, fiber indigestible to nonruminants, i.e. coarse feed, can be utilized in the feeding of cows. Typical coarse feeds include hay, grass silage, corn silage, straw and pasture as well as various whole grain/leguminous silages.

In efficient milk production ruminants are given in addition to coarse feeds also concentrate feeds which comprise energy (i.e. carbohydrates and fat) and protein components, preferably also minerals, micronutrients and vitamins. In a typical Finnish ruminant diet the concentrate feed contains mainly grain feeds (oats, barley, wheat) and vegetable oil crushes (rapeseed). In other parts of the world also corn is used as grain and soya is more common as protein feed than rapeseed. A large variety of different byproducts from food industry are also used.

In general, the use of fat is reasonably small since the amount of added fat seldom exceeds 3 % of the diet. Some amounts of vegetable oils, fatty acid calcium salts and mixtures of saturated fatty acids (stearic and palmitic) are added to the diet. The eligible iodine value is over 10, since fats having a low iodine value typically are poorly digestible. Most added fats have a much higher iodine value. Pure palmitic acid has not been given along a feed in a highly bioavailable way. Palmitic acid is completely inert in the rumen and does not decrease coarse feed intake like calcium salts. However, various mixtures having a iodine value of above 10 have been used as fat source, since the poor digestibility of pure palmitic acid (iodine value ≤1, melting point 63 °C) limits its use.

At the beginning of the lactation season when the cow loses weight, blood glucose increasing agents (i.e. glucose precursors), such as propylene glycol, glycerol, sodium propionate and combinations of these can be given.

### The effect of rumen on nutrients in the feed

Microbes in the rumen ferment carbohydrates of the feed to acetic acid, butyric acid and propionic acid, propionic acid being the most important precursor of glucose. These acids are absorbed through the rumen wall and transported to the liver wherein they are converted to useful nutrients. Acetate is consumed in the liver for producing energy. It can also be converted to longer fatty acids which may e.g. function as precursors to fat. Part of the acetate is transferred with the blood circulation to the mammary gland. Butyric acid can also be used as a precursor of milk fat.

Part of the protein in the feed degrades by means of microbes in the rumen to ammonia, part of which is absorbed through the rumen wall and is converted to urea in the liver. Another part of the protein is converted by microbes to microbial protein, which is then absorbed from the small intestine as amino acids. Still another part of the protein in the feed is transported directly to the small intestine and is absorbed as amino acids, such as the protected amino acids.

Fat in the feed is modified by the rumen and thus the milk fat profile is not the same as that of fat in the feed. All fats which are not completely inert in the rumen decrease feed intake and rumen digestibility of feed material. Milk composition and fat quality can be influenced by cows' diet. Oil feeding has negative effects on both rumen function and milk formation. The protein concentration is lowered, the fat concentration is decreased, the proportion of trans fatty acids is increased and the properties of the fat during milk processing are weakened. Typical milk fat contains more than 70 % of saturated fatty acids. Almost one third of the milk fat is palmitic acid.

The nutrients obtained from the feed are metabolised in a number of ways before forming milk components. The saturated fatty acids in the feed that are transported to the small intestine are absorbed as micelles and are converted in the small intestine wall to triglycerides, phospholipides and lipoproteins. These are transported in the lympha past the liver to the blood circulation for the needs of e.g. muscles and the mammary gland. Thus the long fatty acids absorbed from the diet cannot cause fatty liver. Fatty liver arises when the cow loses weight which occurs when metabolising high amounts of saturated fatty acids from the muscles in the liver.

### Cell energy is formed in the mitochondria

Mitochondria produce energy, adenosine triphosphate (ATP), for the needs of the whole cell metabolism system. Cells, also the cells of a mammary gland, contain dozens of mitochondria. Particularly the mammary gland and the heart muscle need high amounts of energy. Cell scientists have found that certain nutrient factors may enhance the mitochondrial function.

ATP is the energy form which the cell can use for various needs. The intermediate product in ATP formation is called active acetic acid (acetyl-CoA). The key measure in energy consumption is acetyl-CoA.

Acetyl-CoA is obtained from carbohydrates and fats and, in case of lack of energy, also from carbon chains of proteins which naturally is not economical. Acetyl-CoA is obtained from carbohydrates via the pyruvic acid pathway which is important for nonruminants but less significant in ruminants. The main source of acetyl-CoA in ruminants, in addition to the acetic acid formed in the rumen, is the β-oxidation of fatty acids. It has now been noticed that palmitic acid from the feed is surprisingly suitable for producing acetic acid and further acetyl-CoA from the acetic acid. When suitable enzymes and nutritional factors enhancing mitochondrial function are further present, the availability of energy from the mitochondria is flexible and follows the demand. In a way, palmitic acid is an energetic preform wherefrom energy can "easily" be returned to use.

A ruminant does not use much glucose to produce acetyl-CoA. For that purpose acetate is used. The acetate is partly derived from β-oxidation of fatty acids wherein palmitic acid has a significant role.

### The role of palmitic acid in the energy chain

Palmitic acid is an important source of energy. It is needed also in several cell functions and in functional molecules for several different tasks. Enzymes can synthesize palmitic acid e.g. in the liver and in the mammary gland. Different tissues obtain energy via β-oxidation of palmitic acid.

If the eight acetyl-CoA:s produced from palmitic acid are used for complete oxidation in the citric acid cycle, even 129 ATP molecules are obtained from one palmitic acid molecule. When the function of mitochondria is effective, lots of energy could be obtained from palmitic acid whenever needed.

### The need of energy for the production of milk components

Lactose (a disaccharide of glucose and galactose) is the most important factor affecting the osmotic pressure of milk and thus lactose synthesis also regulates the amount of secreted milk. 80-85 % of the carbon of milk lactose is derived from glucose. Part of the carbon of galactose may be produced from acetate. Lactose is synthesized in the Golgi apparatus of the cells in the mammary gland and the process requires three ATP molecules for the formation of one lactose molecule. A sufficient supply of acetate may therefore save glucose for lactose production.

The amino acids needed for the synthesis of milk protein are partly obtained from the blood circulation. Non-essential amino acids can be synthesized in the mammary gland by utilizing the carbon C2 chain of acetate, but also this process requires ATP energy. Approximately 30 mmol ATP/1 g protein is needed in this protein synthesis.

The energy needed for the synthesis of milk fat varies depending on how the milk fat is formed. Part of the fatty acids are obtained in *de novo* synthesis in the mammary gland, part is obtained via the digestive tract from the feed or after conversion in the rumen or in the liver. Further, esterification of fatty acids requires 10.5 mmol ATP per 1 g fat.

When fatty acids are synthesized in the udder (i.e. *de novo* synthesis), 27 mmol ATP per gram of fat is required. Therefore, the more milk fat components are obtained as fatty acids from the blood circulation, the more energy is saved for other purposes. Short and middle-chain fatty acids are obtained only via *de novo* synthesis and the long ones are obtained only from the blood circulation. Of the milk fatty acids only palmitic acid can be produced in both ways. In view of energy economy, it has now been realised that it would be desirable to obtain more palmitic acid directly from the blood circulation.

### Composition of milk fat

The composition of milk fat usually differs remarkably from the fat composition of the feed. Rumen hydrolysis as well as hydrogenation partly influence this change. Also *de novo* synthesis from acetate takes place in the mammary gland and affects the composition of milk fat.

In the liver, mostly the longer fatty acids, and also palmitic acid, are synthesized. In the udder on the other hand, mainly the short chain fatty acids, but also palmitic acid, are synthesized. A high concentration of ≥ C18 in the diet may lower fatty acid synthesis.

It has now been surprisingly found that by a certain type of feed it is possible to energetically efficiently increase the proportion of milk fat derived from the feed, whereby energy is saved in the mammary gland for the synthesis of protein and lactose, and thereby milk production is increased. The most abundant fatty acid in milk is palmitic acid which can be obtained from both the blood circulation and via *de novo* synthesis. By using the feed according to the invention it is possible to transfer palmitic acid from the feed via the digestive tract into the blood circulation.

### Detailed description of the invention

The present invention is directed to a ruminant feed, which in addition to conventional feed raw materials contains inside and on the surface of the feed raw material particles a fatty acid mixture wherein the content of saturated free fatty acids is at least 90 %, and the total amount of the fatty acid mixture in the feed is higher than 10 % by weight.

The invention is also directed to a process for preparing said feed, to a method for increasing milk production of a lactating animal and for increasing concentrations of protein and fat in milk.

Conventional feed raw materials include common protein, carbohydrate and/or fat containing materials used in feeds. Said protein, carbohydrate and or/fat containing raw materials comprise for example grains, peas, beans, molasses and vegetable oil crushes. In addition to protein, carbohydrate and fat containing raw materials the feed according to the invention may contain also other raw materials, such as minerals, additives and/or auxiliary agents. Additives include e.g. micronutrients and vitamins. Examples of auxiliary agents include pelletizing agents and emulsifying agents.

Within this disclosure, ruminants or ruminant animals include lactating animals such as for example cattle, goats and sheep. Dairy cows are preferred.

In a preferred embodiment, the content of saturated free fatty acids in the fatty acid mixture is at least 95%, preferably at least 97%, more preferably at least 98 %, even more preferably 99%, and most preferably 100%. A preferred fatty acid is palmitic acid. In the most preferred embodiment the fatty acid mixture consists essentially of palmitic acid (i.e. it is essentially pure). When the fatty acid mixture consists essentially of palmitic acid, it means that said mixture contains at least 90%, 95%, 98%, or at least 99% palmitic acid.

The fatty acid mixture preferably has a iodine value of at most 4, more preferably at most 2, even more preferably at most 1.5 and most preferably ≤1. The melting point of the fatty acid mixture is at least 60°C, preferably at least 62°C, and most preferably about 63°C.

The total amount of the fatty acid mixture in the feed depends naturally on the feed type but it is above 10 % by weight, such as at least 10.1 %, 10.5 % or 11 %, and may vary between above 10 % and below 50 %, being preferably at least 15 % but at most 35 %. In case of energy concentrate feed the preferred total amount of the fatty acid mixture is 15-25 %, preferably about 20 %. The preferred amount of the fatty acid mixture in a mineral concentrate feed is 25-35 %, preferably about 30 %. In an amino acid concentrate the total amount of the fatty acid mixture is preferably over 10 % but below 20 %, for example about 15 %.

The feed according to the invention preferably does not contain other saturated free fatty acids than those that are derived from the added fatty acid mixture or it contains them at most 5%, preferably at most 1%, more preferably at most 0.5%, even more preferably at most 0.1% by weight of the feed. The proportion of palmitic acid of the free saturated fatty acids in the feed according to the invention is preferably at least 90%, preferably at least 95%, more preferably 97%, even more preferably 98 %, and most preferably at least 99%.

The feed according to the invention produces glucose, palmitic acid and amino acids to the cow's metabolic system and preferably also enhances mitochondrial function. The feed according to the invention also improves the energy utilization in the milk production process of ruminants. When the utilization of energy is improved, milk production increases and the concentration of fat in milk rises. Especially the feed intensifies fat synthesis in the mammary gland by bringing the main component of milk fat for use in the cells and thus there is no need to synthesize it and thereby energy is saved. Thus the limiting glucose can be utilized more effectively in lactose production whereby milk production increases. The milk protein content is increased when there is no need to produce glucose from amino acids which are also obtained directly from the feed. When there is no need for the cow to lose weight at the beginning of the lactation season, fertility problems are decreased.

It has now been found that when animals, in addition to the acetate formed in the rumen, obtain ATP energy also via the acetate oxidized from palmitic acid, preferably glucose from a glucogenic feed and amino acids from proteinaceous feed, both the amount of milk and its protein and fat contents can be increased. It is essential for the purposes of the invention that palmitic acid is obtained from such a source of fat which does not disturb the rumen, worsen the digestibility of coarse feed and decrease eating. This is achieved for the first time with the feed according to the present invention.

The feed according to the invention preferably contains at least one emulsifier. Emulsifiers which have both emulsifying and pelletizing effects are preferred. Preferably the emulsifiers are selected from the group consisting of nonionic emulsifiers. Castor oil based emulsifiers may be mentioned as examples of preferred emulsifiers. The amount of emulsifier used in the feed according to the invention is 0.01-2 %, preferably 0.02-1 °70, more preferably 0.02-0.5%, even more preferably 0.05-0.06 % by weight of the feed.

A surprisingly large increase in milk production was obtained especially when cows were fed a feed according to the invention which contained a combination of palmitic acid, an emulsifier, a glucogenic precursor, amino acids and certain components which intensify cell level function. The "correct" addition of palmitic acid in feed together with suitable feed components improved energy efficiency of ruminant feeding and feed utilization. A preferred feed according to the present invention contains palmitic acid that is completely inert in the rumen and the utilization of which in the cows' metabolic system is effected by the preparation process and suitable components of the feed.

Consequently, in a preferred embodiment the feed according to the invention comprises glucogenic precursor(s). The glucogenic precursor(s) are preferably selected from the group consisting of propylene glycol, glycerol, salts of propionate, and combinations thereof. The amount of the glucogenic precursor(s) in the feed according to the invention is 1-20%, preferably 5-15% by weight of the feed.

Further, the feed according to the invention may also contain added amino acids. The added amino acids are preferably selected from the group consisting of the essential amino acids, among which methionine, lysine and histidine are preferred. The amount of each one of the added amino acids in the feed according to the invention is 0.1-2%, preferably 0.5-1 % by weight of the feed.

In a further embodiment, the feed according to the invention comprises added components that enhance the function of mitochondria. Preferably such mitochondrial function enhancing components are selected from the group consisting of carnitine, biotine, other B vitamins, omega-3-fatty acids, ubiquinone and combinations thereof. The amount of the mitochondrial function enhancing components is 0.5-5%, preferably 1-3% by weight of the feed.

The feed according to the invention may be any type of feed intended for feeding of a lactating animal. As examples may be mentioned complete feeds and compound or concentrate feeds, such as protein concentrate feeds, mineral concentrate feeds, energy concentrate feeds and amino acid concentrates, among which energy concentrate feeds, amino acid concentrates and mineral concentrate feeds are preferred.

A preferred feed according to the invention contains palmitic acid and an emulsifier and the feed is processed in a way that improves digestion of palmitic acid in the small intestine. The melting point of palmitic acid is 63°C and iodine value ≤1. Said fatty acid does not therefore disturb rumen function since it completely passes the rumen and does not decrease feed intake like fatty acid calcium salts or fatty acid mixtures which have a lower melting point and higher iodine value. The digestibility of low iodine value palmitic acid is poor when fed as such and thus the efficiency must be improved by using an emulsifier. When palmitic acid is absorbed by the feed particles together with an emulsifier, it firstly slowers fermentation of feed particles in the rumen and most importantly, has improved digestibility. In the small intestine the fatty acids absorbed by the feed particles are converted into emulgated micelles before they can be absorbed through the intestine wall. Lycolecithine of bile acids functions also as an emulsifier in the small intestine but its effect is intensified when the feed has been processed with an emulsifier.

In the process for preparing the feed according to the invention, when palmitic acid is added to a feed raw material mixture which is heated above 75°C for at least 20 minutes, the fat gradually melts and is evenly absorbed inside and on the surface of feed particles, preferably under the influence of a suitable emulsifier.

In a preferred embodiment, the feed according to the invention is an energy concentrate feed or a mineral concentrate feed, which contains in addition to palmitic acid an emulsifier and as a glucose source either propylene glycol, glycerol or salts of propionic acid (sodium, calcium) or their combinations. Said energy concentrate feed or mineral concentrate feed may also contain small amounts of mitochondrial function enhancing components, such as carnitine, biotin, other B vitamins, omega-3 fatty acids, ubiquinone, and combinations thereof, as well as added amino acids. A preferred amount of palmitic acid in an energy concentrate feed is between 15-25 %, preferably about 20 %. In a preferred mineral concentrate feed according to the invention the amount of palmitic acid is between 25-35 %, preferably about 30 %.

In a further preferred embodiment the feed according to the invention is an amino acid concentrate which contains in addition to palmitic acid, an emulsifier, and glucose sources also amino acids which are fully utilized only after the cell level energy metabolism has been intensified with the aid of palmitic acid. As added amino acids can be used *i.a.* methionine, lysine or histidine or their combinations. In a further preferred embodiment the amino acid concentrate according to the invention also contains components enhancing mitochondrial function, especially as regards beta oxidation and fat synthesis. Such components include for example carnitine, biotin, other B vitamins, omega-3 fatty acids, ubiquinone, and combinations thereof. A preferred amount of palmitic acid in an amino acid concentrate feed is between 10-20 %, preferably about 15 %.

**It** is preferred according to the invention that the added fatty acid has been treated with an emulsifier in the preparation process of the feed mixture, whereupon the fatty acid mixture is evenly applied inside and on the surface of feed particles whereby utilization of nutrients is enhanced and the digestibility of fat is improved. Unlike several other high-fat feeds, the feed according to the invention is also palatable, even highly attractive for the cows. Therefore the feed intake does not decrease feed intake compared to a feed which does not contain added fats (the fat percentage of a feed which does not contain added fats is typically 2-4 % by weight).

The invention is also directed to a method for increasing milk production of a lactating animal and for increasing the concentrations of protein and fat in milk, which method comprises feeding to said animal the feed according to the invention in amounts which, depending on the feed type, correspond to the normal feeding recommendations of said feed type.

A further object of the invention is the use of palmitic acid for preparing a ruminant feed wherein the content of added palmitic acid is higher than 10 % by weight and wherein said palmitic acid has during the preparation process of said feed been applied inside and on the surface of feed raw material particles.

A still further object of the invention is the use of palmitic acid for increasing milk production of a lactating animal and for increasing concentrations of protein and fat in milk, wherein to a lactating animal is given one or more feeds which provide said animal with a daily amount of palmitic acid which is 0.2-1 kg/day, preferably between 0.3-0.8 kg/day, and most preferably between 0.4-0.7 kg/day. Typically the daily amount of palmitic acid is at least 0.2 kg/day, preferably at least 0.3 kg/day, more preferably at least 0.4 kg/day, and most preferably at least 0.5 kg/day.

Preferably in the uses according to the invention the feeds are prepared using at least one emulsifier. Also preferably in the uses according to the invention the palmitic acid is essentially pure as disclosed herein. Further, also all other preferred features of embodiments disclosed herein for the feeds according to the invention are applicable for the disclosed uses.

Embodiments of the invention include i.a. the following:

As the 1^{st} embodiment the invention comprises a ruminant feed, which in addition to conventional feed raw materials contains inside and on the surface of feed raw material particles a fatty acid mixture wherein the content of saturated free fatty acids is at least 90 % and the total amount of the fatty acid mixture in the feed is higher than 10 % by weight.

As the 2^{nd} embodiment the invention comprises the feed according to embodiment 1 wherein the content of saturated free fatty acids in the fatty acid mixture is at least 95%, preferably at least 97%, more preferably at least 98%, even more preferably at least 99%, and most preferably 100%.

The 3^{rd} embodiment of the invention is the feed according to embodiment 1 or 2, wherein the fatty acid mixture consists essentially of palmitic acid.

The 4^{th} embodiment of the invention is the feed according to any one of embodiments 1-3, wherein the fatty acid mixture has a iodine value of at most 4, preferably at most 2, more preferably at most 1.5 and most preferably ≤ 1.

The 5^{th} embodiment of the invention is the feed according to any one of embodiments 1-4, wherein the fatty acid mixture has a melting point of at least 60°C, preferably at least 62°C, and most preferably about 63°C.

The 6^{th} embodiment of the invention is the feed according to any one of embodiments 1-5, wherein the total amount of the fatty acid mixture in the feed is 10.1-50%.

The 7^{th} embodiment of the invention is the feed according to any one of embodiments 1-6, which further comprises at least one emulsifier.

The 8^{th} embodiment of the invention is the feed according to embodiment 7, wherein the emulsifier is selected from the group consisting of nonionic emulsifiers.

The 9^{th} embodiment of the invention is the feed according to embodiment 7 or 8, wherein the amount of the emulsifier is 0.01-2%, preferably 0.02-1%, more preferably 0.02-0.5% by weight of the feed.

The 10^{th} embodiment of the invention is the feed according to any one of embodiments 1-9, which further comprises glucogenic precursor(s).

The 11^{th} embodiment of the invention is the feed according to embodiment 10, wherein the glucogenic precursors are selected from the group consisting of propylene glycol, glycerol, salts of propionate and combinations thereof.

The 12^{th} embodiment of the invention is the feed according to embodiment 10 or 11, wherein the amount of glucogenic precursor(s) is 1-20%, preferably 5-15% by weight of the feed.

The 13^{th} embodiment of the invention is the feed according to any one of embodiments 1-12, which furher comprises added amino acids.

The 14^{th} embodiment of the invention is the feed according to embodiment 13, wherein the added amino acids are selected from the group consisting of methionine, lysine and histidine.

The 15^{th} embodiment of the invention is the feed according to embodiment 13 or 14 wherein the amount of each added amino acid is 0.1-2%, preferably 0.5-1% by weight of the feed.

The 16^{th} embodiment of the invention is the feed according to any one of embodiments 1-15, which further comprises added components that enhance the function of mitochondria.

The 17^{th} embodiment of the invention is the feed according to embodiment 16, wherein said mitochondrial function enhancing components are selected from the group consisting of carnitine, biotine, other B vitamins, omega-3 fatty acids, ubiquinone, and combination thereof.

The 18^{th} embodiment of the invention is the feed according to embodiment 16 or 17, wherein the amount of the mitochondrial function enhancing components is 0.5-5%, preferably 1-3% by weight of the feed.

The 19^{th} embodiment of the invention is the feed according to any one of embodiments 1-18, which is an energy concentrate feed which comprises 15-25 % palmitic acid, at least one emulsifier and at least one glucogenic precursor.

The 20^{th} embodiment of the invention is the feed according to any one of embodiments 1-18, which is a mineral concentrate feed which comprises 25-35 % palmitic acid, at least one emulsifier and at least one glucogenic precursor.

The 21^{st} embodiment of the invention is the feed according to embodiment 19 or 20, which further comprises at least one mitochondrial function enhancing component and/or added amino acids.

The 22^{nd} embodiment of the invention is the feed according to any one of embodiments 1-18, which is an amino acid concentrate feed which comprises 10-20 % palmitic acid, at least one emulsifier, at least one glucogenic precursor and added amino acids.

The 23^{rd} embodiment of the invention is the feed according to embodiment 22, which further comprises at least one mitochondrial function enhancing component.

The 24^{th} embodiment of the invention is a process for preparing the feed according to any one of embodiments 1-23 which process comprises adding among conventional feed raw materials, with simultaneous mixing, a fatty acid mixture wherein the content of saturated free fatty acids is at least 90%, the total amount of the fatty acid mixture in the feed being higher than 10% by weight, heating the feed mixture so that the fatty acid mixture melts and spreads inside and on the surface of the raw material particles of the feed, and pelleting and cooling the mixture.

The 25^{th} embodiment of the invention is the process according to embodiment 24, wherein an emulsifier is added to the feed mixture before heating.

The 26^{th} embodiment of the invention is a method for increasing milk production of a lactating animal and for increasing concentrations of protein and fat in milk, which method comprises giving to said animal the feed according to any one of embodiments 1-23.

The 27^{th} embodiment of the invention is the use of palmitic acid for preparing a ruminant feed wherein the content of added palmitic acid is higher than 10 % by weight and wherein said palmitic acid has during the preparation process of said feed been applied inside and on the surface of feed raw material particles.

The 28^{th} embodiment of the invention is the use of palmitic acid for increasing milk production of a lactating animal and for increasing concentrations of protein and fat in milk, wherein to a lactating animal is given one or more feeds which provide said animal with a daily amount of palmitic acid which is 0.2-1 kg/day, preferably between 0.3-0.8 kg/day.

The 29th embodiment of the invention is the use according to embodiment 27 or 28, wherein the feeds are prepared using at least one emulsifier.

The following examples illustrate the invention without limiting the same.

### Example 1. Preparation of a feed

Starting materials are feed components which are mixed with a fatty acid mixture containing at least 90 % of palmitic acid. The melting point of the fatty acid mixture has to be at least 60 °C and the iodine value at the highest 4. The fatty acid mixture is mixed in a blender for 3 minutes, an emulsifier is added, and the emulsifier and the fatty acids are melted among the feed mass in a long term conditioner for about 20 minutes at a temperature of at least about 75 °C and at most about 85 °C, in order for the fatty acid mixture to slowly melt and spread with the help of the emulsifier evenly inside and on the surface of the feed particles. Then the feed mass is pelletized and cooled. Thus the whole feed mixture is treated with the molten fatty acid and emulsifier and therefore at least partly protected from microbial degradation in the rumen. By using the feed described above, more digestible nutrients can be brought to the cow's small intestine. Especially the high amount of palmitic acid in bioavailable form enables positive changes in milk production as well as in milk composition and in feed utilization.

### Example 2. Feed

The following composition is an example of a feed composition that increases blood glucose and blood palmitic acid supply for the mammary gland.

| | |
|---|---|
| Feed grain (wheat, barley, oats) | 0-50 |
| Sugar beet pulp | 0-30 |
| Wheat bran | 0-30 |
| Molasses | 0-8 |
| Protein crush (rapeseed, soya) | 0-50 |
| Wheat middlings | 0-20 |
| Minerals | 0-5 |
| Premixes (vitamins, mineral nutrients) | 0-2 |
| Propylene glycol | 1-15 |
| Glycerol/Sodium propionate | 0-5 |
| Amino acid mixture | 0-2 |
| B vitamin mixture | 0-2 |
| Carnitine | 0-1 |
| Palmitic acid | 10.1-30 |
| Emulsifier | 0.02-2 |

### Example of the fatty acid composition of the added fat:

| | | preferably | more preferably |
|---|---|---|---|
| C16:0 | 90-100 | 95-100 | 98-100 |
| C18:0 | 0-10 | 0-5 | 0-2 |
| C18:1 | 0-5 | 0-2 | 0-1 |
| others | 0-5 | 0-2 | 0-1 |
| Melting point | 60-65 °C | | |
| Iodine value | 0-4 | 0-3 | 0-1 |
| Total trans | 0 | | |

### Example 3. Feeding experiment

A feeding experiment was performed where 1-3 kg of a conventional complete feed was replaced by a feed according to the invention. The experiment was continued for two months.

The composition of the feed according to the invention in the feeding experiment (% by weight):

| | |
|---|---|
| Sugar beet pulp | 20 |
| Barley | 20 |
| Palmitic acid | 20 |
| Wheat bran | 14 |
| Oat bran | 10 |
| Propylene glycol | 10 |
| Molasses | 2 |
| Sodium bicarbonate | 2 |
| Biotin | 1 |
| Carnitine premix | 0.4 |
| Methionine premix | 0.5 |
| Emulsifier | 0.1 |

### Results:

| | Reference | Test feed |
|---|---|---|
| Milk kg/d | 29.5 | 32.5 |
| Fat % | 3.98 | 4.43 |
| Protein % | 3.15 | 3.37 |

The results show that the milk production as well as fat and protein concentrations increased significantly.

## Claims

1. A ruminant feed, **characterized in that** in addition to conventional feed raw materials the feed contains inside and on the surface of feed raw material particles a fatty acid mixture wherein the content of saturated free fatty acids is at least 90 % and the total amount of the fatty acid mixture in the feed is higher than 10 % by weight.

2. The feed according to claim 1, **characterized in that** the fatty acid mixture consists essentially of palmitic acid.

3. The feed according to claim 1 or 2, **characterized in that** the fatty acid mixture has a iodine value of at most 4, preferably at most 2, more preferably at most 1.5 and most preferably ≤ 1.

4. The feed according to any one of claims 1-3, **characterized in that** the total amount of the fatty acid mixture in the feed is 10.1-50%.

5. The feed according to any one of claims 1-4, **characterized in that** it further comprises at least one emulsifier, preferably selected from the group consisting of nonionic emulsifiers.

6. The feed according to any one of claims 1-5, **characterized in that** it further comprises glucogenic precursor(s).

7. The feed according to any one of claims 1-6, **characterized in that** it further comprises added amino acids.

8. The feed according to any one of claims 1-7, **characterized in that** it further comprises added components that enhance the function of mitochondria.

9. The feed according to any one of claims 1-8, **characterized in that** it is an energy concentrate feed which comprises 15-25 % palmitic acid, at least one emulsifier and at least one glucogenic precursor.

10. The feed according to any one of claims 1-9, **characterized in that** it is a mineral concentrate feed which comprises 25-35 % palmitic acid, at least one emulsifier and at least one glucogenic precursor.

11. The feed according to any one of claims 1-10, **characterized in that** it is an amino acid concentrate feed which comprises 10-20 % palmitic acid, at least one emulsifier, at least one glucogenic precursor and added amino acids.

12. A process for preparing the feed according to any one of claims 1-11 **characterized in that** among conventional feed raw materials is added with simultaneous mixing a fatty acid mixture wherein the content of saturated free fatty acids is at least 90%, the total amount of the fatty acid mixture in the feed being higher than 10 % by weight, the feed mixture is heated so that the fatty acid mixture melts and spreads inside and on the surface of the raw material particles of the feed, and the mixture is pelletized and cooled.

13. A method for increasing milk production of a lactating animal and for increasing concentrations of protein and fat in milk, **characterized in that** to said animal is given the feed according to any one of claims 1-11.

14. Use of palmitic acid for preparing a ruminant feed wherein the content of added palmitic acid is higher than 10 % by weight and wherein said palmitic acid has during the preparation process of said feed been applied inside and on the surface of feed raw material particles.

15. Use of palmitic acid for increasing milk production of a lactating animal and for increasing concentrations of protein and fat in milk, wherein to a lactating animal is given one or more feeds which provide said animal with a daily amount of palmitic acid which is 0.2-1 kg/day, preferably between 0.3-0.8 kg/day.
